(19) Europäisches Patentamt
European Patent Office
Office européen des brevets

(11) EP 2 260 707 A2

(12) EUROPEAN PATENT APPLICATION

(43) Date of publication:
**15.12.2010 Bulletin 2010/50**

(51) Int Cl.:
***A01N 47/34*** *(2006.01)* ***A01P 7/00*** *(2006.01)*

(21) Application number: **10183030.5**

(22) Date of filing: **26.05.1995**

(84) Designated Contracting States:
**CH ES FR IT LI NL**

(30) Priority: **08.06.1994 CH 180794**

(62) Document number(s) of the earlier application(s) in accordance with Art. 76 EPC:
**05024510.9 / 1 642 501**
**95920898.4 / 0 765 120**

(71) Applicant: **Syngenta Participations AG.**
**4058 Basel (CH)**

(72) Inventors:
- **Skillman, Stephen Wilson**
**4058, Basel (CH)**
- **Buholzer, Franz**
**4058, Basel (CH)**

(74) Representative: **Waterman, John Richard**
**Syngenta Crop Protection Münchwilen AG**
**Schaffhauserstrasse**
**4332 Stein (CH)**

# (54) Synergistic compositions comprising lufenuron

(57) A pesticidal composition comprising a quantitatively variable and synergistic combination of the pesticidally active compound lufenuron in the free form or in the form of an agrochemically acceptable salt thereof, with either a) diafenthiuron, or b) furathiocarb, or c) fenoxycarb, or d) pirimicarb, or e) triazamate, or f) imidadoprid, or g) azamethiphos, or h) monocrotophos, or i) methidathion, or k) cyromazin, or m) cyhalothrin, or n) cypermethrin, or o) aldicarb, or p) deltamethrin, or q) endosulfan, or r) chlorpyrifos, or s) methomyl, or t) terbufos or u) carbofuran, or v) a substance obtainable from the Bacillus thuringiensis strain GC 91, or w) chlorfluazuron, or x) beta-cyfluthrin, or y) methiocarb fenoxycarb, and at least one adjuvant; to a method of controlling pests with said composition; to a process for the preparation of the composition; to the use thereof and to plant propagation material treated therewith and to the use of a compound of lufenuron for the preparation of said novel composition are described.

EP 2 260 707 A2

## Description

The present invention relates to a synergistic pesticidal composition comprising a combination of pesticides and to a method of controlling pests with said composition. The invention further relates to a process for the preparation of the novel composition, to the use thereof and to plant propagation material treated therewith, and to the use of a compound of formula (A) below for the preparation of said novel composition.

Certain mixtures of pesticides have been proposed in the literature for pest control. However, the biological properties of these known mixtures are unable to satisfy the requirements made of them in the field of pest control in all respects, so that there is still a need to provide further mixtures having synergistic properties for pest control, in particular for controlling insects and representatives of the order Acarina. This need is met by the provision of the composition of this invention.

Accordingly, the invention relates to a pesticidal composition comprising a quantitatively variable and synergistically acting combination of the pesticidally active compound of formula

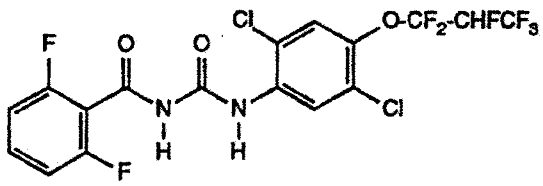

**(A, lufenuron),**

in the free form or in the form of an agrochemically acceptable salt thereof, and of one or more than one pesticidally active compound (B) selected from the group of pesticides consisting of
abamectin, known from The Pesticide Manual, 10thEd. (1994), The British Crop Protection Council, London, page 3;
2-methyl-2-(methylthio)propionaldehyde O-methylcarbamoyloxime (aldicarb), known from The Pesticide Manual, 10th Ed. (1994), The British Crop Protection Council, London, page 24;
S-6-chloro-2,3-dihydro-2-oxo-1,3-oxazolo[4,5-b]pyridin-3-ylmethyl O,O-dimethyl phosphorothioate (azamethiphos), known from The Pesticide Manual, 10thEd. (1994), The British Crop Protection Council, London, page 55;
*S*-3,4-dihydro-4-oxo-1,2,3-benzotriazin-3-ylmethyl O,O-dimethyl phophorodithioate (azinphos-methyl), known from The Pesticide Manual, 10thEd. (1994), The British Crop Protection Council, London, page 59;
a substance obtainable from a Bacillus thuringiensis strain, e.g. from GC 91
(NCTC 11821), known from EP-B-0'178'151;
ethyl N-[2,3-dihydro-2,2-dimethylbenzofuran-7-yloxycarbonyl(methyl)aminothio]-N-isopropyl-β-alaninate (benfuracarb), known from The Pesticide Manual, 10thEd. (1994), The British Crop Protection Council, London, page 78;
2-methylbiphenyl-3-ylmethyl (Z)-(1RS)-3-(2-chloro-3,3,3-trifluoroprop-1-enyl)-2,2-dimethylpropanecarboxylate (bifenthrin), known from The Pesticide Manual, 10thEd. (1994), The British Crop Protection Council, London, page 96;
isopropyl 4,4'-dibromobenzilate (bromopropylate), known from The Pesticide Manual, 10thEd. (1994), The British Crop Protection Council, London, page 120; 2-tert-butylimino-3-isopropyl-5-phenyl-1,3,5-thiadiazian-4-one (bupmfezin), known from The Pesticide Manual, 10thEd. (1994), The British Crop Protection Council, London, page 128;
2,3-dihydro-2,2-dimethylbenzofuran-7-yl methylcarbamate (carbofuran), known from The Pesticide Manual, 10thEd. (1994), The British Crop Protection Council, London, page 152; 2,3-dihydro-2,2-dimethylbenzofuran-7-yl (dibutylaminothio)methylcarbamate (carbosulfan), known from The Pesticide Manual, 10thEd. (1994), The British Crop Protection Council, London, page 154;
S,S'-(2-dimethylaminotrimethylene) bis(thiocarbamate) (cartap), known from The Pesticide Manual, 10thEd. (1994), The British Crop Protection Council, London, page 157; 2-chloro-1-(2,4-dichlorophenyl)vinyl diethyl phosphate (chlorfenvinphos), known from The Pesticide Manual, 10thEd. (1994), The British Crop Protection Council, London, page 174;
1-[3,5-dichloro-4-(3-chloro-5-trifluoromethyl-2-pyridyloxy)phenyl]-3-(2,6-difluorbenzoyl)urea (chlorfluazuron), known from The Pesticide Manual, 10thEd. (1994), The British Crop Protection Council, London, page 176;
O,O-diethyl O-3,5,6-trichloro-2-pyridyl phosphorothioate (chlorpyrifos), known from The Pesticide Manual, 10thEd. (1994), The British Crop Protection Council, London, page 200; (RS)-α-cyano-4-fluoro-3-phenoxybenzyl-(1RS)-cis-trans-3-(2,2-dichlorovinyl)-2,2-dimethylcyclopropanecarboxylate (cyfluthrin), known from The Pesticide Manual, 10thEd. (1994), The British Crop Protection Council, London, page 248;
a reaction mixture of two enantiomeric pairs in a ration of about 1:2:
(S)-α-cyano-4-fluoro-3-phenoxybenzyl-(1R)-cis3-(2,2-dichlorvinyl)-2,2-dimethylcyclopropancarboxylate and (R)-α-cyano-4-fluoro-3-phenoxybenzyl-(1S)-cis-3-(2,2-dichlorvinyl)-2,2-dimethylcyclopropancarboxylate with (S)-α-cyano-4-fluoro-3-phenoxybenzyl-(1R)-trans- 3-(2,2-dichlorvinyl)-2,2-dimethylcyclopropancarboxylate and (R)-α-cyano-4-fluoro-3-phenoxybenzyl-(1S)-trans3-(2,2-dichlorvinyl)-2,2-dimethylcyclopropancarboxylate (beta-Cyfluthrin), known from The Pesticide Manual, 10thEd. (1994), The British Crop Protection Council, London, page 250;
mixture of (S)-α-cyano-3-phenoxybenzyl Z(1R)-cis-3-(2-chloro-3,3,3-trifluoropropenyl)-2,2-dimethylcyclopropanecarboxylate and (R)-α-cyano-3-phenoxybenzyl Z(1S)-cis-3-(2-chloro-3,3,3-trifluoropropenyl)-2,2-dimethylcyclopropanecarboxylate (lambda-cyhalathrin), known from The Pesticide Manual, 10thEd. (1994), The British Crop Protection Council, London, page 254;
(RS)-α-cyano-3-phenoxybenzyl(1RS)-cis-trans-3-(2,2-dichlorovinyl)-1,1-dimethylcyclopropanecarboxylate (cypermethrin, cypermethrin high-cis), known from The Pesticide Manual, 10thEd. (1994), The British Crop Protection Council, London, page 259; racemate consisting of (S)-α-cyano-3-phenoxybenzyl-(1R)-cis-3-(2,2-dichlorovinyl)-2,2-dimethylcyclopropanecarboxylate and (R)-α-cyano-3-phenoxybenzyl-(1S)-cis-3-(2,2-dichlorovinyl)-2,2-dimethylcyclopropanecarboxylate (alpha-cypermethrin), known from The Pesticide Manual, 10thEd. (1994), The British Crop Protection Council, London, page 261;
N-cyclopropyl-1,3,5-triazine-2,4,6-triamine (cyromazin), known from The Pesticide Manual, 10thEd. (1994). The British Crop Protection Council, London, page 269; (S)-α-cyano-3-phenoxybenzyl(1R)-cis-3-(2,2-dibrmovinyl)-2,2-dimethylcyclopropanecarboxylate (deltamethrin), known from The Pesticide Manual, 10thEd. (1994). The British Crop Protection Council, London, page 287;
1-tert-butyl-3-(2,6-diisapropropyl-4-phenoxyphenyl)thiourea (diafenthiuron), known from The Pesticide Manual, 10thEd. (1994), The British Crop Protection Council, London, page 294;
O,O-diethyl O-2-isopropyl-6-methylpyrimidin-4-yl-phosphorothioate (diazinon), known from The Pesticide Manual, 10thEd. (1994), The British Crop Protection Council, London, page 296;
2,2-dichlorovinyl dimethyl phosphate (dichlorvos), known from The Pesticide Manual, 10thEd. (1994). The British Crop Protection Council, London, page 313; 1-(4-chlomphenyl)-3-(2,6-difluorobenzoyl)urea (diflubenzuron), known from The Pesticide Manual, 10thEd. (1994). The British Crop Protection Council, London, page 313; a mixture of 50 to 80 % of (2RS,4SR)-4-(2-ethyl-1,3-dioxolan-4-ylmethyl phenyl
ether and 50 to 20 % of (2RS,4RS)-4-(2-ethyl-1,3-dioxolan-4-ylmethoxy)phenyl phenyl ether (diofenolan), known from The Pesticide Manual, 10thEd. (1994), The British Crop Protection Council, London, page 363;
(1,4,5,6,7,7-hexachloro-8,9,10-trinorborn-5-en-2,3-ylenebismethylene)sulfite (endosulfan), known from The Pesticide Manual, 10thEd. (1994), The British Crop Protection Council, London, page 388;
α -ethylthio-o-tolyl methylcarbamate (ethiofencarb), known from The Pesticide Manual, 10thEd. (1994). The British Crop Protection Council, London, page 406; 4-tert-butylphenethyl quinazolin-4-yl ether (fenazaquin), known from The Pesticide Manual, 10thEd. (1994), The British Crop Protection Council. London, page 426; O,O-dimethyl O-4-nitro-m-tolyl phosphorothioate (fenitrothion), known from The Pesticide Manual, 10thEd. (1994), The British Crop Protection Council, London, page 435; 2-sec-butylphenyl methylcarbamate (fenobucarb), known from The Pesticide Manual, 10thEd. (1994), The British Crop Protection Council, London, page 437;
ethyl 2-(4-phenoxyphenoxy)ethylcarbamate (fenoxycarb), known from The Pesticide Manual, 10thEd. (1994), The British Crop Protection Council, London, page 442; tert-butyl(E)-α-(1,3-dimethyl-5-phenoxypyrazol-4-yl-methylenamino-oxy)-p-toluate (fenpyroximate), known from The Pesticide Manual, 10thEd. (1994), The British Crop Protection Council, London, page 450;
(RS)-α-cyano-3-phenoxybenzyl (RS)-2-(4-chlorophenyl)-3-methylbutyrate (fenvalerate), known from The Pesticide Manual, 10thEd. (1994), The British Crop Protection Conncil, London, page 458;
(±)-5-amino-(2,6-dichloro-α,α,α-trifluoro-p-tolyl)-4-trifluoromethyl-sulfinylpyrazol-3-carbonitrile (fipronil), known from The Pesticide Manual, 10thEd. (1994), The British Crop Protection Council, London, page 463;
(RS)-α-cyano-3-phenoxybenzyl N-(2-chloro-α,α,α-trifluoro-p-tolyl)-D-valinate (tau-fluvalinat), known from The Pesticide Manual, 10thEd. (1994), The British Crop Protection Council, London, page 515;
S-[formly(methyl)carbamoylmethyl] O,O-dimethyl phosphorodithioate (formothion), known from The Pesticide Manual, 10thEd. (1994), The British Crop Protection Council, London, page 527;
butyl 2,3-dihydro-2,2-dimethylbenzofuran-7-yl N,N'-dimethyl-N,N'-thiodicarbamate (furathiocarb), known from The Pesticide Manual, 10thEd. (1994), The British Crop Protection Council, London, page 535;
7-chlorobicyclo[3.2.0]hepta-2,6-dien-6-yl dimethylphosphate (heptenophos), known from The Pesticide Manual, 10thEd. (1994), The British Crop Protection Council, London, page 559;
1-(6-chloro-3-pyridylmethyl)-N-nitroimidazolidin-2-ylidenamine (imidacloprid), known from The Pesticide Manual, 10thEd. (1994), The British Crop Protection Council, London, page 591;
O-5-chloro-1-isopropyl-1H-1,2,4-triazol-3-yl O,O-dimethyl phosphorothioate (isazofos), known from The Pesticide Manual, 10thEd. (1994), The British Crop Protection Council, London, page 605;
2-isopropylphenyl methylcarbamate (isoprocarb), known from The Pesticide Manual, 10thEd. (1994), The British Crop Protection Council, London, page 609;
methyl (E)-3-(dimethoxyphosphinothiolyloxy)-2-methylacrylate (methacrifos), known from The Pesticide Manual, 10thEd. (1994), The British Crop Protection Council, London, page 671;

O,S-dimethyl phosphoramidothioate (methamidophos), known from The Pesticide Manual, 10thEd. (1994), The British Crop Protection Council, London, page 673;
S-2,3-dihydro-5-methoxy-2-oxo-1,3,4-thiadiazol-3-ylmethyl O,O-dimethyl phosphorodithioate (methidathion), known from The Pesticide Manual, 10thEd. (1994), The British Crop Protection Council, London, page 675;
4-methylthio-3,5-xylyl methylcarbamate (methiocarb), known from The Pesticide Manual, 10thEd. (1994), The British Crop Protection Council, London, page 677;
S-methyl N-(methylcarbamoyloxy)thioacetimidate (methomyl), known from The Pesticide Manual, 10thEd. (1994), The British Crop Protection Council, London, page 579;
methyl 3-(dimethoxyphosphinoyloxy)but-2-enoate (mevinphos), known from The Pesticide Manual, 10thEd. (1994), The British Crop Protection Council, London, page 703; dimethyl (E)-1-methyl-2-(methylcarbamoyl)vinyl phosphate (monocrotophos), known from The Pesticide Manual, 10thEd. (1994), The British Crop Protection Council, London, page 708;
(E)-$N^1$-[(6-chloro-3-pyridyl)methyl]-$N^2$-cyano-$N^1$-methylacetamidine (NI-25), known from The Pesticide Manual, 10thEd. (1994), The British Crop Protection Council, London, page 730;
(E)-N-(6-chloro-3-pyridylmethyl)-N-ethyl-N'-methyl-2-nitrovinylidenamine (nitenpyram), known from The Pesticide Manual, 10thEd. (1994), The British Crop Protection Council, London, page 736;
O,O-diethyl O-4-nitrophenyl phosphorothioate (parathion), known from The Pesticide Manual, 10thEd. (1994), The British Crop Protection Council, London, page 769; O,O-dimethyl O-4-nitrophenyl phosphorothioate (pamthion-methyl), known from The Pesticide Manual, 10thEd. (1994), The British Crop Protection Council, London, page 771;
S-6-chloro-2,3-dihydro-2-oxo-1,3-benzoxml-3-ylmethyl O,O-diethyl phosphorodithioate (phosalone), known from The Pesticide Manual, 10thEd. (1994), The British Crop Protection Council, London, page 799;
2-chloro-2-diethylcarbamoyl-1-methylvinyl dimethyl phosphate (phosphamidon), known from The Pesticide Manual, 10thEd. (1994), The British Crop Protection Council, London, page 803;
2-dimethylamino-5,6-dimethylpyrimidin-4-yl dimethylcarbamate (pirimicarb), known from The Pesticide Manual, 10thEd. (1994), The British Crop Protection Council, London, page 820;
O-4-bromo-2-chlorophenyl O-ethyl S-propyl phosphorothioate (profenofos), known from The Pesticide Manual, 10thEd. (1994), The British Crop Protection Council, London, page 836;
2-isopropoxyphenyl methylcarbamate (propoxur), known from The Pesticide Manual, 10thEd. (1994), The British Crop Protection Council, London, page 860;
2-tert-butyl-5-(4-tert-butylbenzylthio)-4-chloropyridazin-3(2H)-one (pyridaben), known from The Pesticide Manual, 10thEd. (1994), The British Crop Protection Council, London, page 879;
4-phenoxyphenyl (RS)-2-(pyridyloxy)propyl ether (pyriproxyfen), known from The Pesticide Manual, 10thEd. (1994), The British Crop Protection Council, London, page 887;
5-chloro-N-{2-[4-(2-ethoxyethyl)-2,3-dimethylphenoxy]ethyl}-6-ethylpyrimidin-4-amine (pyrimidifen), known from The Pesticide Manual, 10thEd. (1994), The British Crop Protection Council, London, page 887;
(4-ethoxypbenyl)[3-(4-fluoro-3-phenoxyphenyl)propyl](dimethyl)silane (silafluofen), known from The Pesticide Manual, 10thEd. (1994), The British Crop Protection Council, London, page 912;
N-(4-tert-butylbenzyl)-4-chloro-3-ethyl-1-methylpyrazol-5-carboxamide (tebufenpyrad), known from The Pesticide Manual, 10thEd. (1994), The British Crop Protection Council, London, page 945;
1-(3,5-dichloro-2,4-difluorophenyl)-3-(2,6-difluorobenzoyl)urea (teflubenzaron), known from The Pesticide Manual, 10thEd. (1994), The British Crop Protection Council, London, page 951;
S-tert-butylthiomethyl O,O-dimethyl phosphorodithioate (terbufos), known from The Pesticide Manual, 10thEd. (1994), The British Crop Protection Council, London, page 957, and
ethyl(3-tert-butyl-dimethylcarbamoyl-1H-1,2,4-triazol-5-ylthio)acetate, (triazamate), known from The Pesticide Manual, 10thEd. (1994), The British Crop Protection Council, London, page 1006, and at least one adjuvant.

The compound 1-(2,5-dichloro-4-[1,1,2,3,3,3-hexafluoroprop-1-oxy]phenyl)-3-(2,6-difluorobenzoyl)urea (lufenuron) of formula (A) is described in, inter alia. The Pesticide Manual, 10thEd. (1994), The British Crop Protection Council, London, page 628.

The agrochemically acceptable salts of the compound of fomula(A) are typically acid addition salts of inorganic and organic acids, preferably of hydrochloric acid, hydrobromic acid, sulfuric acid, nitric acid, perchloric acid, phosphoric acid, formic acid, acetic acid, trifluoroacetic acid, oxalic acid, malonic acid, toluenesulfonic acid or benzoic acid.

Preferred compositions within the scope of this invention are those that contain the compound of formula (A) in the free form as active ingredient.

A composition comprising a combination of the compound of formula (A) and, only one further pesticidally active compound (B) is also preferred.

A particularly preferred composition is that comprising a combination of the compound of formula (A) together with either

a) diafenthiuron, or b) furathiocarb, or c) fenoxycarb, or d) pirimicarb, or e) triazamate, or
f) imidacloprid, or g) azamethiphos, or h) monocrotophos, or i) methidathion, or
k) cyromazin, or 1) profenofos, or m) cyhalothrin, or n) cypermethrin, or o) aldicarb, or
p) deltamethrin, or q) endosulfan, or r) chlorpyrifos, or s) methomyl, or t) terbufos or
u) carbofuran, or v) a substance obtainable from the Bacillus thuringiensis strain GC 91, or
w) chlorfluazuron, or x) beta-cyfluthrin, or y) methiocarb.

The pesticidal combination of this invention will preferably contain the compound of formula (A) and one of the pesticides (B) in a weight ratio of 1: 50 to 5 : 1, especially in a ratio from 1 : 20 to 20 : 1, more particularly from 10 : 1 to 1 : 10, still more particularly from 5 : 1 to 1 : 5, very particularly from 2 : 1 to 1 : 2, first and foremost in the ratio 1 : 1; alternatively in the ratio 5: 1, or 5 : 2, or 5 : 3, or 5 : 4, or 4 : 1, 4 : 3, or 3 : 1, or 3 : 2, or 2 : 1, or 1 : 5, or 2 : 5, or 3 : 5, or 4 : 5, or 1 : 4, or 3 : 4, or 1 : 3, or 2 : 3, or 1 :2.

It has been found that a particularly effective composition is that which contains one part by weight of the compound of formula (A) and 10 parts by weight of the compound 4-bromo-2-chlorophenyl O-ethyl S-propyl phosphorothioate (profenofos). This composition is very particularly suitable for controlling representatives of the genera Earias and Heliothis.

Surprisingly, it has now been found that the combination of the pesticide of formula (A) and one of the pesticides (B) not only brings about the expected additive enhancement of the activity spectrum on the pests to be controlled, but also has a synergistic effect that potentiates the activity ranges of both compounds from two points of view.

On the one hand, the concentrations of the compound of formula (A) and of the individual compounds (B) are reduced with no reduction in the activity of said compounds. On the other hand, the combination also achieves a high degree of pest control where the individual compounds are completely inactive at too low concentrations. This feature permits on the one hand a broadening of the activity spectrum against the controllable pests and, on the the other, an enhancement of safety of application.

The compositions of this invention have useful preventive and/or curative properties in the field of pest control even at low concentration. They are well tolerated by warm-blooded animals, fish and plants, and they have a very favourable biocidal spectrum. The compositions are effective against all, or individual, development stages of normally sensitive as well as resistant pests of animals such as insects and representatives of the order Acarina. The onset of the insecticidal and/or acaricidal action of the novel compositions may follow directly, i.e. a kill of the pests will occur immediately or only after some time, for example where moulting is effected, or indirectly, for example in diminished oviposition and/or hatching rate, the good activity corresponding to a mortality of at least 50 to 60 %.

The aforementioned animal pests typically include:

of the order Lepidoptera

Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula andalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
of the order Coleoptera, for example
Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp., Oryzaephilus spp., Otiorhynchus spp., Phlyctinus spp., Popillia spp., Psylliodes spp., Rhizopertha spp., Scambeidae, Sitophilus spp., Sitotroga spp., Tenebrio spp., Tribolium spp. and Trogoderma spp.;
of the order Orthoptera, for example
Blatta spp., Blattella spp., Gryllotalpa spp., Leucophaea maderae, Locusta spp., Periplaneta spp. and Schistocerca spp.;
of the order Isoptera, for example
Reticulitermes spp.;
of the order Psocoptera, for example
Liposcelis spp.;
of the order Anoplura, for example
Haematopinus spp., Linognathus spp., Pediculus spp., Pemphigus spp. and Phylloxera spp.;

of the order Mallophaga, for example
Damalinea spp. and Trichodectes spp.;
of the order Thysanoptera, for example
Frankliniella spp., Hercinothrips spp., Taeniothrips spp., Thrips palmi, Thrips tabaci and Scirtothrips aurantii;
of the order Heteroptera, for example
Cimex spp., Distantiella theobroma, Dysdercus spp., Euchistus spp. Eurygaster spp. Leptocorisa spp., Nezara spp., Piesma spp., Rhodnius spp., Sahlbergella singularis, Scotinophara spp. and Triatoma spp.;
of the order Homoptera, for example
Aleurothrixus floccosus, Aleyrodes brassicae, Aonidiella spp., Aphididae, Aphis spp.,

Aspidiotus spp., Bemisia tabaci, Ceroplaster spp., Chrysomphalus aonidium, Chrysomphalus dictyospermi, Coccus hesperidum, Empoasca spp., Eriosoma lanigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
of the order Hymenoptera, for example
Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
of the order Diptera, for example
Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp. and Tipula spp.;
of the order Siphonaptera, for example
Ceratophyllus spp. and Xenopsylla cheopis;
of the order Thysanura, for example
Lepisma saccharina and
of the order Acarina, for example
Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.

Within the scope of this invention it is possible to control in particular pests

(1) of the order Lepidoptera,
especially Adoxophyes spp., Alabama argillaceae, Clysia ambiguella, Clysia pomonella, Crocidolomia binotalis, Cydia spp., Earias spp., Heliothis spp., Lobesia botrana, Ostrinia nubilalis, Phthorimaea operculella, Sparganothis spp. and Spodoptera spp.;

(2) of the order Coleoptera
in particular the family Curculionidae, more particularly Anthonomus spp., more particularly still A. grandis, very particularly the family Chrysomelidae, most preferably Leptinotarsa decemlineata;

(3) of the order Homoptera
in particular the family Aphididae, more particularly the genus Aphis, most particularly A. gossypii; in particular the family Aleurodidae, preferably Aleurothrixus floccus and Bemisia tabaci; in particular Familie Psyllidae, more preferably Psylla spp.,

(4) of the order Thysanoptera, in particular the family Thripidae,
preferably Frankliniella spp., Thrips palmi and Thrips tabaci;

(5) of the order Acarina
in particular the family Eriophyidae, more particularly Aculus schlechtendali and Phyllocoptruta oleivora;

(6) of the order Diptera,
in particular the family Agromyzidae, more particularly Liriomyza trifolii.

With the novel pesticidal combinations it is possible to control, i.e. inhibit or destroy, in particular pests of the above mentioned type that occur in plants or, especially, in cultivated plants and ornamentals, in horticulture and in forestry, or in parts of such plants such as fruit, blossoms, leaves, stems, tubers or roots, while in some cases parts of plants that grow later can also be protected against these pests.

The pesticidal combination of this invention can be used with advantage for pest control in cereals such as maize or sorghum; fruit such as pomes, stone fruit and soft fruit, typically apples, pears, plums, peaches, almonds, cherries, or berries, for example strawberries, raspberries and blackberries; leguminous plants, typically including beans, lentils, peas and soybeans; oil plants such as rape, mustard, poppy, olives, sunflowers, coconut, castor oil plants, cocoa beans and groundnuts; cucurbits such as marrows, cucumber and melons; fibre plants such as cotton, flax, hemp and jute; citrus fruit such as oranges, lemons, grapefruit and mandarins; vegetables such as spinach, lettuce, asparagus, cabbages, carrots, onions, tomatoes, potatoes and paprika; lauraceae such as avocados, cinnamon and camphor; and tobacco, nuts, coffee, egg plants, sugar cane, tea, pepper, vines, hops, bananas and natural rubber plants or ornamentals; in particular in maize, sorghum, pomes, stone fruit, leguminous plants, cucurbits, cotton, citrus fruit, vegetables, egg plants, vines, hops or ornamentals; preferably in maize, sorghum, apples, pears, plums, peaches, beans, peas, soybeans, olives, sunflowers, coconuts, cocoa beans, cabbages, tomatoes, potatoes, vines or cotton; and, most preferably, in vines, citrus fruit, apples, pears, tomatoes and cotton.

Further utilities of the pesticidal combinations of this invention are the protection of stored goods and materials as well as in the hygiene sector, especially the protection of domestic animals and productive livestock against pests of the indicated type.

Depending on the intended objectives and the prevailing circumstances, the pesticidal compositions are emulsifiable concentrates, suspension concentrates, directly sprayable or dilutable solutions, coatable pastes, dilute emulsions, wettable powders, soluble powders, dispersible powders, wettable powders, dusts, granulates or encapsulations in polymer substances, comprising the compound of formula (A) and one or more than one pesticide (B).

The active ingredients are used in those compositions in pure form, the solid compounds being typically used in a specific particle size, or preferably together with at least one of the adjuvants customary in formulation technology, for example extenders such as solvents, or solid carriers, or surface-active compounds (surfactants).

Suitable solvents are typically aromatic hydrocarbons or partially hydrogenated aromatic hydrocarbons, preferably the fractions of alkylbenzenes containing 8 to 12 carbon atoms, such as xylene mixtures, alkylated naphthalenes or tetrahydronaphthalene, aliphatic or cycloaliphatic hydrocarbons such as paraffins or cyclohexane; alcohols such as ethanol, propanol or butanol; glycols and their ethers and esters such as propylene glycol, dipropylene glycol ether, diethylene glycol or 2-methoxyethanol or 2-ethoxyethanol; ketones such as cyclohexanone, isophorone or diacetone alcohol; strongly polar solvents such as N-methylpyrrolid-2-one, dimethyl sulfoxide or N,N-dimethylformamide; water; vegetable oils or epoxidised vegetable oils such as rape oil, castor oil, coconut oil or soybean oil or epoxidised rape oil, castor oil, coconut oil or soybean oil, and silicone oils.

The solid carriers typically used for dusts and dispersible powders are usually natural mineral fillers such as calcite, talcum, kaolin, montmorillonite or attapulgite. To improve the physical properties it is also possible to add highly dispersed silicic acids or highly dispersed absorbent polymers. Suitable granulated adsorptive carriers are porous types, including pumice, broken brick, sepiolite or bentonite; and suitable nonsorbent carriers are calcite or sand. In addition, innumerable granulated materials of inorganic or organic nature may be used, especially dolomite or pulverised plant residues.

Depending on the type of compound to be formulated, suitable surface-active compounds are nonionic, cationic and/or anionic surfactants or mixtures of surfactants having good emulsifying, dispersing and wetting properties. The surfactants listed below shall be regarded merely as exemplary; many more surfactants customarily employed in formulation technology and suitable for use in the practice of the invention are described in the relevant literature.

Nonionic surfactants are preferably polyglycol ether derivatives of aliphatic or cycloaliphatic alcohols, saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols. Further suitable nonionic surfactants are water-soluble polyadducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit. Representative examples of nonionic surfactants are nonylphenol polyethoxyethanols, polyethoxylated castor oil, polyadducts of polypropylene and polyethylene oxide, tributylphenol polyethoxylate, polyethylene glycol and octylphenol polyethoxylate. Fatty acid esters of polyoxyethylene sorbitan, e.g. polyoxyethylene sorbitan trioleate, are also suitable nonionic surfactants.

Cationic surfactants are preferably quaternary ammonium salts carrying, as N-substituent, at least one $C_8$-$C_{22}$alkyl radical and, as further substituents, unsubstituted or halogenated lower alkyl, benzyl or hydroxy-lower alkyl radicals. The salts are preferably in the form of halides, methyl sulfates or ethyl sulfates. Examples are stearyltrimethylammonium chloride and benzyl bis(2-chloroethyl)ethylammonium bromide.

Suitable anionic surfactants may be water-soluble soaps as well as water-soluble synthetic surface-active compounds. Suitable soaps are the alkali metal salts, alkaline earth metal salts and unsubstituted or substituted ammonium salts of higher fatty acids ($C_{10}$-$C_{22}$). e.g. the sodium or potassium salts of oleic or stearic acid or of natural fatty acid mixtures which can be obtained e.g. from coconut oil or tall oil. Further suitable soaps are also the fatty acid methyltaurin salts.

More frequently, however, synthetic surfactants are used, preferably fatty sulfonates, fatty sulfates, sulfonated benzimidazole derivatives or alkylarylsulfonates. The fatty sulfonates or sulfates are usually in the form of alkali metal salts, alkaline earth metal salts or unsubstituted or substituted ammonium salts and usually contain a $C_8$-$C_{22}$alkyl radical, which also includes the alkyl moiety of acyl radicals. Typical examples are the sodium or calcium salt of ligninsulfonic acid, of dodecyl sulfate or of a mixture of fatty alcohol sulfates obtained from natural fatty acids. These compounds also comprise the salts of sulfated and sulfonated fatty alcohol/ethylene oxide adducts. The sulfonated benzimidazole derivatives preferably contain two sulfonic acid groups and one fatty acid radical containing 8 to 22 carbon atoms. Typical examples of alkylarylsulfonates are the sodium, calcium or triethanolammonium salts of dodecylbenzenesulfonic acid, dibutylnaphthalenesulfonic acid or of a condensate of naphthalenesulfonic acid and formaldehyde. Corresponding phosphates, e.g. salts of the phosphoric acid ester of an adduct of p-nonylphenol with 4 to 14 mol of ethylene oxide, or phospholipids, are also suitable.

The compositions will usually comprise 0.1 to 99 %, preferably 0.1 to 95 %, of a combination of the compound of formula (A) and one or more than one pesticide (B), and 1 to 99.9 %, preferably 5 to 99.9 %, of at least one solid or liquid adjuvant; usually they will contain 0 to 25 %, preferably 0.1 to 20 %, of surfactants (in each case percentages are by weight). Whereas commercial products will preferably be formulated as concentrates, the end user will normally employ dilute formulations having a substantially lower concentration of active ingredient. Particularly preferred formulations will be made up as follows: (throughout, percentages are by weight):

| Emulsifiable concentrates: | |
|---|---|
| combination of (A) and (B): | 1 to 95 %, preferably 5 to 20 % |
| surfactant: | 1 to 30 %, preferably 10 to 20 % |
| solvent: | 5 to 98 %, preferably 70 to 85 % |

| Dusts: | |
|---|---|
| combination of (A) and (B): | 0.1 to 10 %, preferably 0.1 to 1 % |
| solid carrier: | 99.9 to 90 %, preferably 99.9 to 99 % |

| Suspension concentrates: | |
|---|---|
| combination of (A) and (B): | 5 to 75 %, preferably 10 to 50 % |
| water: | 94 to 24 %, preferably 88 to 30 % |
| surfactant: | 1 to 40 %, preferably 2 to 30 % |

| Wettable powders: | |
|---|---|
| combination of (A) and (B): | 0.5 to 90 %, preferably 1 to 80 % |
| surfactant: | 0.5 to 20 %, preferably 1 to 15 % |
| solid carrier: | 5 to 99 %, preferably 15 to 98 % |

| Granules: | |
|---|---|
| combination of (A) and (B): | 0.5 to 30 %, preferably 3 to 15 % |
| solid carrier: | 99.5 to 70 %, preferably 97 to 85 % |

The novel compositions may also contain further solid or liquid adjuvants such as stabilisers, e.g. vegetable oils or epoxidised vegetable oils (e.g. epoxidised coconut oil, rapeseed oil or soybean oil), antifoams, e.g. silicone oil, preservatives, viscosity regulators, binders and/or tackifiers, as well as fertilisers or other chemical agents for obtaining

special effects, typically including bactericides, fungicides, nematicides, molluscicides or herbicides.

The compositions of this invention are prepared in known manner; in the absence of adjuvants, typically by grinding, sieving and/or compressing a solid active ingredient or mixture of active ingredients, for example to a specific particle size; and in the presence of at least one adjuvant, for example by intimately mixing and/or grinding the active ingredient or mixture of active ingredients with the adjuvant or adjuvants. The invention also relates to the preparation of the compositions.

The methods of applying the compositions, i.e. the methods of controlling pests of the indicated type, typically spraying, atomising, dusting, coating, dressing, scattering or pouring, selected in accordance with the intended objectives and prevailing circumstances, and the use of the compositions for controlling pests of the indicated type, are further objects of the invention. Typical rates of concentration are in the range from 0.1 to 1000 ppm, preferably from 0.1 to 500 ppm, of active ingredient. The rate of application may vary over a wide range and will depend on the nature of soil, the type of application (foliar application, seed dressing, application to the seed furrow), the cultivated plant, the pest to be controlled, the prevailing climatic conditions and other factors governed by the type of application, time of application and target crop. The rates of application per hectare will usually be from 1 to 2000 g/ha, more particularly from 10 to 1000 g/ha, preferably from 20 to 600 g/ha.

A preferred method of application in the field of plant protection is application to the foliage of the plants (foliar application), the number of applications and the rate of application depending on the risk of infestation by the particular pest. However, the active ingredients can also penetrate the plants through the roots (systemic action) by drenching the locus of the plants with a liquid formulation or by applying the active ingredient in solid form to the locus of the plants, for example to the soil, e.g. in granular form (soil application). In paddy rice crops, such granules may be applied to the flooded rice field.

The compositions of the invention are also suitable for protecting plant propagation material, e.g. seeds such as fruit, tubers or grains, or plant cuttings, against animal pests. The propagation material can be treated with the formulation before planting. Seeds, for example, can be dressed before sowing. The compounds of the invention can also be applied to grains (coating), either by impregnating the grains with a liquid formulation or by coating them with a solid formulation. The composition can also be applied to the locus of planting when planting the propagation material, for example to the seed furrow during sowing. The invention relates also to these methods of treating plant propagation material and to the plant propagation material so treated.

The invention is illustrated by the following non-limitative Examples.

Formulation Examples (% = per cent by weight; ratios = weight ratios)

| Example F1: Emulsifiable concentrate | a) | b) | c) |
|---|---|---|---|
| combination (ratio of compound of formula (A) to a compound (B) 1:1) | 25 % | 40 % | 50 % |
| Ca dodecylbenzenesulfonate | 5 % | 8 % | 6 % |
| polyethoxylated castor oil (36 mol EO) | 5 % | - | - |
| tributylphenol polyethoxylated (30 mol EO) | - | 12 % | 4 % |
| cyclohexanone | - | 15 % | 20 % |
| xylene mixture | 65 % | 25 % | 20 % |

Emulsions of any desired concentration can be prepared from such concentrates by dilution with water.

| Example F2: Solutions | a) | b) | c) | d) |
|---|---|---|---|---|
| combination (2:1) | 80 % | 10 % | 5 % | 95 % |
| 2-methoxyethanol | 20 % | - | - | - |
| polyethylene glycol MW 400 | - | 70 % | - | - |
| N-methyl-2-pyrrolidone | - | 20 % | - | - |
| epoxidised coconut oil | - | - | 1 % | 5 % |
| petroleum spirit (boiling range 160-190°C) | - | - | 94 % | - |

The solutions are suitable for use in the form of microdrops.

| Example F3: Granulates | a) | b) | c) | d) |
|---|---|---|---|---|
| combination (1:10) | 5 % | 10 % | 8 % | 21 % |
| kaolin | 94 % | - | 79 % | 54 % |
| highly dispersed silica | 1 % | - | 13 % | 7 % |
| attapulgite | - | 90 % | - | 18 % |

The active ingredients are dissolved in dichloromethane, the solution is sprayed onto the carrier, and the solvent is subsequently evaporated in vacuo.

| Example F4: Dusts | a) | b) |
|---|---|---|
| combination (1:5) | 2 % | 5 % |
| highly dispersed silica | 1 % | 5 % |
| talcum | 97 % | - |
| kaolin | - | 90 % |

Ready-to-use dusts are obtained by intimately mixing the carriers with the active ingredients.

| Example F5: Wettable powders | a) | b) | c) |
|---|---|---|---|
| combination (1:1) | 25 % | 50 % | 75 % |
| sodium ligninsulfonate | 5 % | 5 % | - |
| sodium lauryl sulfate | 3 % | - | 5 % |
| sodium diisobutylnaphthalene-sulfonate | - | 6 % | 10 % |
| octylphenol polyethoxylate (7-8 mol EO) | - | 2 % | - |
| highly dispersed silica | 5 % | 10 % | 10 % |
| kaolin | 62 % | 27 % | - |

The active ingredients are mixed with the additives, and the mixture is ground thoroughly in a suitable mill. This gives wettable powders which can be diluted with water to give suspensions of any desired concentration.

| Example F6: Emulsifiable concentrate | |
|---|---|
| combination (1:1) | 10 % |
| octylphenol polyethoxylate (4-5 mol EO) | 3 % |
| calcium dodecylbenzenesulfonate | 3 % |
| polyethoxylated castor oil (36 mol EO) | 4 % |
| cyclohexanone | 30 % |
| xylene mixture | 50 % |

Emulsions of any desired concentration can be prepared from this concentrate by dilution with water.

| Example F7: Dusts | a) | b) |
|---|---|---|
| combination (1:2) | 5 % | 8 % |
| talcum | 95 % | - |
| kaolin | - | 92 % |

Ready-to-use dusts are obtained by mixing the active ingredients with the carrier and grinding the mixture on a suitable mill.

| Example F8: Extruder granules | |
|---|---|
| combination (1:3) | 10 % |
| sodium ligninsulfonate | 2 % |
| carboxymethyl cellulose | 1 % |
| kaolin | 87 % |

The active ingredients are mixed with the additives, and the mixture is ground and moistened with water. This mixture is extruded, granulated and subsequently dried in a stream of air.

| Example F9: Coated granulates | |
|---|---|
| combination (1:1) | 3 % |
| polyethylene glycol (MW 200) | 3 % |
| kaolin | 94 % |

In a mixer, the finely ground active ingredients are applied uniformly to the polyethylene glycol, which has been moistened with kaolin, to give dust-free coated granules.

| Example F10: Suspension concentrate | |
|---|---|
| combination (2:1) | 40 % |
| ethylene glycol | 10 % |
| nonylphenol polyethoxylate | |
| (15 mol EO) | 6 % |
| sodium ligninsulfonate | 10 % |
| carboxymethyl cellulose | 1 % |
| 37% aqueous formaldehyde solution | 0.2 % |
| silicone oil in the form of a 75 % | |
| aqueous emulsion | 0.8 % |
| water | 32 % |

The finely ground active ingredients are mixed intimately with the additives to give a suspension concentrate from which suspensions of any desired concentration can be prepared by dilution with water.

It is often more expedient to formulate the compound of formula (A) and one of the pesticides (B) singly and then to mix them in the desired ratio in the applicator as a tank mixture in water shortly before application.

Biological Examples (% = per cent by weight, unless otherwise indicated)

A synergistic effect is always obtained whenever the activity of the combination of the compound of formula (A) with one of the pesticides (B) is greater than the sum of the activities of the individually applied compounds.

For example, the expected pesticidal activity We of a given combination of two pesticides can be calculated as follows (q.v. COLBY, S.R., "Calculating synergistic and antagonstic response of herbicide combinations", Weeds 15, pages 20-22, 1967):

$$We = X + \frac{Y \cdot (100-X)}{100}$$

wherein

X = Percentage mortality, compared with untreated controls, after treatment with the compound of formula (A) at a rate of application of p kg/hectare (= 0 %).

Y = Percentage mortality, compared with untreated controls, after treatment with a compound (B) at a rate of application of q kg/hectare.

We = The expected pesticidal activity (percentage mortality compared with untreated controls) after treatment with the compound of formula (A) and a compound (B) at a rate of application of p + q kg a.i/ha.

If the actually observed value is lower than the expected value We, then there is synergism.

The synergistic effect of the combinations of the compound of formula (A) with one or several of the pesticides (B) is demonstrated in the following Examples.

Example B1: Action against Bemisia tabaci

Bean plants are placed in gauze cages and populated with adults of Bemisia tabaci. After oviposition, all adults are removed and 10 days later the plants with the nymphs present thereon are treated with an aqueous suspension of a spray mixture containing the active ingredient in a concentration of 50 ppm. Evaluation of the hatching rate (in %) compared with untreated controls is made after a further 14 days.

In this test the combinations of the compound of formula (A) with one or several of the pesticides (B) have a synergistic effect.

Example B2: Action against Spodoptera littoralis caterpillars

Young soybean plants are sprayed with an aqueous emulsion of a spray formulation containing 400 ppm of active ingredient. After the spray coating has dried, the soybean plants are populated with 10 caterpillars of Spodoptera littoralis in the 3rd stage and put into a plastic container. Evaluation is made 3 days later. The percentage reduction of the population and percentage reduction in the feeding damage (percentage kill) is determined by comparing the number of dead caterpillars and the feeding damage on the treated plants with those on the untreated plants.

In this test the combinations of the compound of formula (A) with one or several of the pesticides (B) have a synergistic effect.

Example B3: Ovicidal action against Lobesia botrana

Eggs of Lobesia botrana laid on filter paper are immersed for a brief time in an aqueous acetonic solution containing 400 ppm of the test pesticidal combination. After the test solution has dried, the eggs are incubated in petri dishes. The percentage hatching of the eggs compared with untreated controls is assessed 6 days later (percentage reduction of hatching).

In this test the combinations of the compound of formula (A) with one or several of the pesticides (B) have a synergistic effect.

Example B4: Ovicidal action against Heliothis virescens

Eggs of Heliothis virescens laid on filter paper are immersed for a brief time in an aqueous acetonic solution containing 400 ppm of the test pesticidal combination. After the test solution has dried, the eggs are incubated in petri dishes. The percentage hatching of the eggs compared with untreated controls is assessed 6 days later (percentage reduction of hatching).

In this test the combinations of the compound of formula (A) with one or several of the pesticides (B) have a synergistic effect.

## Claims

**1.** An insecticidal or acaricidal composition comprising a quantitatively variable and synergistic combination of the pesticidally active compound lufenuron,

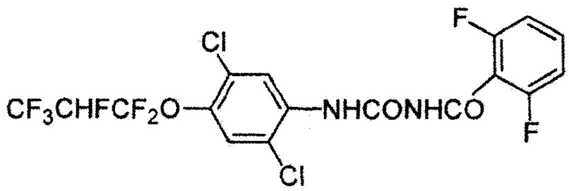

in the free form or in the form of an agrochemically acceptable salt thereof, and either a) diafenthiuron, or b) furathiocarb, or c) fenoxycarb, or d) pirimicarb, or e) triazamate, or f) imidacloprid, or g) azamethiphos, or h) monocrotophos, or i) methidathion, or k) cyromazin, or m) cyhalothrin, or n) cypermethrin, or o) aldicarb, or p) deltamethrin, or q) endosulfan, or r) chlorpyrifos, or s) methomyl, or t) terbufos or u) carbofuran, or v) a substance obtainable from the Bacillus thuringiensis strain GC 91, or w) chlorfluazuron, or x) beta-cyfluthrin, or y) methiocarb.and of ethyl 2-(4-phenoxyphenoxy)ethylcarbamate (fenoxycarb); and at least one adjuvant.

**2.** A composition according to claim 1, which contains lufenuron in the free form as active ingredient.

**3.** A method of controlling pests, which comprises applying a pesticidally effective amount of a composition as claimed in claims 1 or claim 2 to said pests or to the locus thereof.

**4.** A method according to claim 3, wherein the pests to be controlled are insects of the order Homoptera.

**5.** A method according to claim 3, wherein the pests to be controlled are insects of the order Lepidoptera.

**6.** A method according to claim 3, wherein the pests to be controlled are insects of the order Thysanoptera.

**7.** A method according to claim 3, wherein the pests to be controlled are insects of the order Acarina.

**8.** A method according to claim 3, wherein the pests to be controlled are insects of the order Coleoptera.

**9.** A method according to any one of claims 3 to 8 of controlling propagation material, which comprises treating said propagation material or the locus of planting thereof.

**10.** Plant propagation material treated by the method as claimed in claim 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0178151 B


### Non-patent literature cited in the description


- The Pesticide Manual. The British Crop Protection Council, London, 1994, 3
- The Pesticide Manual. The British Crop Protection Council, 1994, 24
- The Pesticide Manual. The British Crop Protection Council, 1994, 55
- The Pesticide Manual. The British Crop Protection Council, 1994, 59
- The Pesticide Manual. The British Crop Protection Council, 1994, 78
- The Pesticide Manual. The British Crop Protection Council, 1994, 96
- The Pesticide Manual. The British Crop Protection Council, 1994, 120
- The Pesticide Manual. The British Crop Protection Council, 1994, 128
- The Pesticide Manual. The British Crop Protection Council, 1994, 152
- The Pesticide Manual. The British Crop Protection Council, 1994, 154
- The Pesticide Manual. The British Crop Protection Council, 1994, 157
- The Pesticide Manual. The British Crop Protection Council, 1994, 176
- Pesticide Manual. The British Crop Protection Council, 1994, 200
- The Pesticide Manual. The British Crop Protection Council, 1994, 248
- The Pesticide Manual. The British Crop Protection Council, 1994, 250
- The Pesticide Manual. The British Crop Protection Council, 1994, 254
- The Pesticide Manual. The British Crop Protection Council, 1994, 259
- The Pesticide Manual. The British Crop Protection Council, 1994, 261
- The Pesticide Manual. The British Crop Protection Council, 1994, 269
- The Pesticide Manual. The British Crop Protection Council, 1994, 287
- The Pesticide Manual. The British Crop Protection Council, 1994, 294
- The Pesticide Manual. The British Crop Protection Council, 1994, 296
- The Pesticide Manual. The British Crop Protection Council, 1994, 313
- The Pesticide Manual. The British Crop Protection Council, 1994, 363
- The Pesticide Manual. The British Crop Protection Council, 1994, 388
- The Pesticide Manual. The British Crop Protection Council, 1994, 406
- The Pesticide Manual. The British Crop Protection Council, 1940, 426
- The Pesticide Manual. The British Crop Protection Council, 1994, 435
- The Pesticide Manual. The British Crop Protection Council, 1994, 437
- The Pesticide Manual. The British Crop Protection Council, 1994, 450
- The Pesticide Manual. The British Crop Protection Conncil, 1994, 458
- The Pesticide Manual. The British Crop Protection Council, 1994, 463
- The Pesticide Manual. The British Crop Protection Council, 1994, 515
- The Pesticide Manual. The British Crop Protection Council, 1994, 527
- The Pesticide Manual. The British Crop Protection Council, 1994, 535
- The Pesticide Manual. The British Crop Protection Council, 1994, 559
- The Pesticide Manual. The British Crop Protection Council, 1994, 591
- The Pesticide Manual. The British Crop Protection Council, 1994, 605
- The Pesticide Manual. The British Crop Protection Council, 1994, 609
- The Pesticide Manual. The British Crop Protection Council, 1994, 671
- The Pesticide Manual. The British Crop Protection Council, 1994, 673
- The Pesticide Manual. The British Crop Protection Council, 1994, 675
- The Pesticide Manual. The British Crop Protection Council, 1994, 677
- The Pesticide Manual. The British Crop Protection Council, 1994, 579

- The Pesticide Manual. The British Crop Protection Council, 1994, 703
- The Pesticide Manual. The British Crop Protection Council, 1994, 708
- The Pesticide Manual. The British Crop Protection Council, 1994, 730
- The Pesticide Manual. The British Crop Protection Council, 1994, 736
- The Pesticide Manual. The British Crop Protection Council, 1994, 769
- The Pesticide Manual. The British Crop Protection Council, 1994, 771
- The Pesticide Manual. The British Crop Protection Council, 1994, 799
- The Pesticide Manual. The British Crop Protection Council, 1994, 803
- The Pesticide Manual. The British Crop Protection Council, 1994, 820
- The Pesticide Manual. The British Crop Protection Council, 1994, 836
- The Pesticide Manual. The British Crop Protection Council, 1994, 860
- The Pesticide Manual. The British Crop Protection Council, 1994, 879
- The Pesticide Manual. The British Crop Protection Council, 1994, 887
- The Pesticide Manual. The British Crop Protection Council, 1994, 912
- The Pesticide Manual. The British Crop Protection Council, 1994, 945
- The Pesticide Manual. The British Crop Protection Council, 1994, 951
- The Pesticide Manual. The British Crop Protection Council, 1994, 957
- The Pesticide Manual. The British Crop Protection Council, 1994, 1006
- The Pesticide Manual. The British Crop Protection Council, 1994, 628
- **COLBY, S.R.** Calculating synergistic and antagonstic response of herbicide combinations. *Weeds,* 1967, vol. 15, 20-22